# FASCICULE DE BREVET EUROPEEN

(11) **EP 3 880 981 B1**
(45) Date de publication et mention de la délivrance du brevet: **26.03.2025**
(21) Numéro de dépôt: 19817380.9
(22) Date de dépôt: 14.11.2019
(51) Int. Cl.: F16D 41/30, B62M 6/55, F16H 15/20

(54) **DISPOSITIF D'ASSISTANCE ÉLECTRIQUE POUR VÉLO**
ELEKTRISCHES FAHRRADUNTERSTÜTZUNGSGERÄT
ELECTRICAL ASSISTANCE DEVICE FOR BICYCLES

(30) Priorité: 15.11.2018 FR 1871997
(43) Date de publication de la demande: 22.09.2021
(73) Titulaire: Mavic Group, 74650 Chavanod (FR)
(72) Inventeur: MERCAT, Jean-Pierre, 74650 Chavanod (FR)
(74) Mandataire: Innovincia
(86) Numéro de dépôt international: PCT/FR2019/000186
(87) Numéro de publication internationale: WO 2020/099737

(56) Documents cités:
- WO-A1-2016/177494
- WO-A1-2016/177494
- DE-A1- 102014 221 514
- DE-A1- 102014 221 514
- US-A1- 2012 312 618
- US-A1- 2012 312 618

## Description

L'invention concerne les vélos équipés d'un moteur d'assistance électrique. Plus particulièrement, l'invention concerne les moyens de transmission de couple entre le moteur d'assistance et la chaîne de transmission du vélo.

La particularité d'un vélo à assistance électrique est qu'il doit y avoir deux voies de transmission de puissance : une voie pédalier-roue qui transmet le couple généré par le cycliste, et une voie moteur-roue. Ces deux voies de transmission doivent pouvoir se superposer car par principe et pour répondre à la réglementation, le moteur ne doit fournir un couple à la roue que dans la mesure où le cycliste, lui-même, par l'intermédiaire du pédalier, fournit également un couple à la roue.

Différentes configurations de vélo à assistance électrique sont désormais disponibles, la présente invention concerne plus particulièrement, les vélos pour lesquels, le moteur d'assistance est placé dans la partie centrale du vélo en étant notamment intégré au pédalier.

Lors de l'utilisation d'un vélo à assistance électrique, différentes phases fonctionnelles distinctes sont à envisager : le pédalage sans assistance (phase 1), le pédalage avec assistance (phase 2), le pédalage à une vitesse de rotation supérieure à la vitesse de rotation maximale générée par le moteur (phase 3), l'arrêt brusque de pédalage par le cycliste (phase 4) et le rétro-pédalage (phase 5).

Lors du pédalage sans assistance, le comportement du vélo, pour le cycliste, doit ressembler le plus possible à celui d'un vélo sans moteur, c'est-à-dire que tout ce qui est nécessaire à l'assistance comme le moteur électrique, le réducteur mécanique ou tout autre organe de transmission ne doit ni rajouter des frottements supplémentaires, ni générer de bruit supplémentaire, ni rajouter d'inertie supplémentaire.

A cet effet, il est courant d'intercaler un dispositif de roue libre en série dans la voie de transmission entre le moteur et la roue. Les vélos traditionnels, c'est-à-dire, sans assistance électrique, sont d'ailleurs pratiquement tous déjà équipés de mécanisme de roue libre entre le pédalier et la roue. Par conséquent, il est nécessaire de prévoir deux dispositifs de roue libre, chacun étant placé dans une des deux voies de transmission distinctes : moteur-roue et pédalier-roue.

Il faut d'autre part noter qu'il existe deux grands principes de roue-libre, des roues-libres à cliquets qui sont légères mais ont tendance à être bruyantes et des roues-libres à friction transmettant le couple par adhérence avec l'avantage d'être silencieuses, d'avoir un très faible angle d'engagement mais ayant les inconvénients d'être lourdes et encombrantes, de nécessiter une très grande précision d'exécution les rendant assez onéreuses et ayant un couple de frottement résiduel souvent élevé en mode roue-libre de par la précontrainte d'engagement exercée sur les cames ou aiguilles de friction.

Lors du pédalage avec assistance (phase 2), la voie de transmission moteur-roue doit être opérationnelle. La voie de transmission pédalier-roue doit également être opérationnelle.

Dans le cas d'un vélo à moteur central, il est courant de concevoir le vélo de telle manière que la voie de transmission moteur-roue et la voie de transmission pédalier-roue partagent le plus d'éléments en commun. En général, le moteur et les pédales entrainent un plateau commun lequel est relié à la roue par une chaîne de vélo classique à maillons. Dans ce cas, le moteur doit pouvoir se connecter mécaniquement pour apporter un couple moteur d'assistance au niveau du pédalier ou du plateau.

Lorsque dans cette phase de pédalage avec assistance, le cycliste veut pédaler plus vite que la vitesse maxi du moteur, il faut que le moteur se déconnecte afin que le cycliste ne soit pas freiné par le moteur (phase 3). C'est pourquoi, une roue-libre simple est placée à la sortie du moteur. En général, ces roues libres sont de deux types, à cliquet ou à galet.

Chacun de ces types de roue libre présente des inconvénients. Une roue libre à cliquet peut devenir bruyante alors qu'une roue-libre à galet sera certes silencieuse mais sera lourde et générera un couple de frottement plus élevé en phase de roue-libre.

Lorsque le cycliste veut s'arrêter de pédaler brutalement (phase 4), il faudrait pour des raisons de confort et de sécurité, que : Le temps de réaction de la coupure du moteur soit très court et que l'inertie du moteur et de sa chaîne de transmission soit réduite pour éviter de continuer à entraîner les jambes du cycliste ou continuer à faire avancer le vélo alors que le cycliste veut s'arrêter instantanément. Ce n'est malheureusement pas toujours ce qui se passe pour les vélos de l'art antérieur.

Par exemple, dans l'art antérieur US 9,616,969 et US 8,757,311 on retrouve comme sur la plupart des vélos à assistance électrique le plateau d'entraînement qui est entraîné de manière parallèle via une première roue-libre par le pédalier permettant de transmettre le couple de pédalage du cycliste et via une deuxième roue libre par le moteur d'assistance permettant de transmettre le couple d'assistance issu du moteur électrique. Avec une telle disposition, en cas d'arrêt brutal de pédalage par le cycliste, les jambes du cycliste ne seront pas entraînées en rotation car la première roue libre du pédalier se débrayera et il pourra s'arrêter immédiatement de pédaler. En revanche, le moteur continuera d'entraîner le vélo sur sa lancée le temps qu'il décélère ce qui peut être dangereux si le cycliste doit s'arrêter en urgence.

Dans d'autres configurations, par exemple dans EP 2 502 819 le plateau n'est pas entraîné de manière parallèle par deux roues libres distinctes car le plateau se trouve en connexion directe avec les manivelles de sorte que lorsque le cycliste décide de s'arrêter de pédaler brusquement, il doit également arrêter toute la chaîne de transmission du moteur. Et comme l'arrêt de cette voie de transmission moteur demande un certain temps, les pédales vont continuer à tourner pendant ce court laps de temps et entraîner les jambes du cycliste. Il s'agit d'une sensation désagréable qui nuit au confort et à la qualité de l'expérience du cycliste. De plus lorsque le cycliste s'arrêtera brutalement de pédaler, il pourra créer un couple de freinage très élevé sur la chaîne de transmission du moteur pouvant conduire à sa dégradation ou sa rupture.

Il y a enfin une dernière phase fonctionnelle de l'utilisation d'un vélo à assistance électrique qui pose problème dans certaines configurations (phase 5). La première de ces configurations est lorsque le cycliste souhaite pédaler en marche arrière pour repositionner ses pédales, par exemple à l'approche d'un virage afin qu'elles ne viennent pas frotter contre la route ou lorsque le cycliste veut démarrer et positionner son pied d'appel en position sensiblement horizontale.

Il existe une deuxième configuration au cours de laquelle se produit une marche arrière, c'est lorsqu'on manœuvre son vélo pour le ranger. En effet, si le vélo se déplace en marche arrière, la roue libre de transmission de la roue arrière va se bloquer et entraîner les pédales en marche arrière. Lors de cette phase, qu'on peut appeler rétro-pédalage, les vélos à assistance électrique comportant une roue libre simple, par exemple à cliquet, dans la voie de transmission moteur-roue, vont voir cette roue libre également se bloquer en marche arrière et par conséquent entraîner le moteur en marche arrière. La rotation du moteur en marche arrière génère un couple de frottement élevé et une inertie équivalente très élevée. Dans ce cas, le cycliste est capable de fournir un couple de rétropédalage élevé, ce qui va provoquer une accélération angulaire négative élevée et donc un couple négatif très élevé à cause de l'inertie équivalente importante du moteur, ce qui risque de détruire les engrenages du motoréducteur. D'autre part, sur ce type de motorisation, le rapport de réduction entre la vitesse de rotation du moteur et la vitesse de rotation de l'arbre de pédalier est de l'ordre de 100, ce qui réduit inévitablement le rendement de ce type de réducteur, le réducteur peut même devenir irréversible et se bloquer dès qu'un moindre défaut de lubrification ou d'usure apparait et c'est pour cela que le brevet WO 2016/128789 intègre un limiteur de couple qui permet de déconnecter le moteur en cas de couple trop élevé pour éviter de rompre les dentures.

En outre, DE 10 2014 221514 A1 décrit un dispositif d'assistance électrique pour un vélo comprenant un arbre solidaire en rotation d'une paire de manivelles et comprenant un moteur électrique.

Cette phase de retro pédalage est, de plus, souvent mise en œuvre en magasin lors de l'achat du vélo. En effet il est usuel, chez un cycliste averti, de tourner les manivelles à l'envers pour estimer les pertes de frottement de la chaîne de transmission (incluant le frottement des joints et roulements de boîtier de pédalier, de la chaîne et de ses galets ainsi que des roulements de la roue libre arrière), ce qui permet d'estimer la qualité des frottements de la transmission. Lorsque l'on réalise cette expérimentation sur un VAE à roue libre simple, la roue libre se bloque en marche arrière et vient entraîner le moteur en marche arrière, comme le rapport de réduction entre le moteur et le pédalier est élevé, le moteur est donc entraîné en marche arrière à une vitesse de rotation élevée, augmentant ainsi la sensation d'inertie et générant un couple de frottement élevé due aux frottements mécaniques et électromagnétiques du moteur qui se retrouvent multipliés par le rapport de réduction élevé ainsi que par l'inverse du rendement du réducteur, rendant donc cette expérimentation de marche arrière très négative.

Les roue-libres utilisées dans les vélos à assistance électrique de l'art antérieur sont des roue-libres simples se bloquant lorsqu'un couple moteur positif est appliqué sur l'élément d'entrée (moteur d'assistance) et qui se trouve alors transmis à l'élément de sortie (l'arbre de pédalier). En revanche la roue-libre ne permet pas de transmettre un couple négatif en sens opposé sur le même élément d'entrée et se mettra alors à tourner librement dans ce sens de roue-libre. Ainsi tout se passe à souhait quand le sens de rotation est le sens normal d'utilisation, en revanche lorsque l'on inverse le sens de rotation sur l'élément de sortie, l'arbre de pédalier, tout s'inverse, c'est-à-dire que la roue-libre va se bloquer et transmettre du couple en marche arrière en entraînant ainsi toute la chaîne de transmission en marche arrière, ce qui présente les inconvénients listés ci-dessus.

L'objectif de l'invention est de fournir un vélo à assistance électrique qui ne présente pas les inconvénients des vélos de l'art antérieur. Notamment, l'objectif de l'invention est de proposer un dispositif d'assistance électrique pour vélo qui fonctionne optimalement dans les différentes phases fonctionnelles décrites ci-dessus. L'objectif de l'invention est également de proposer un dispositif d'assistance qui présente un fonctionnement silencieux et à frottement extrêmement réduit. L'objectif de l'invention est également de proposer un dispositif d'assistance qui soit le moins volumineux et le moins lourd possible.

L'objectif de l'invention est atteint par la fourniture d'un dispositif d'assistance électrique qui comprend un dispositif de connexion débrayable qui permette le débrayage automatique du moteur en phase de rétropédalage en ne recevant aucune résistance et en ne risquant pas de casser le réducteur lors de cette phase sans avoir besoin d'ajouter un limiteur de couple comme dans l'art antérieur cité ci-dessus.

L'objectif de l'invention est atteint par la fourniture d'un Dispositif d'assistance électrique pour un vélo selon la revendication 1.

L'objectif de l'invention est notamment atteint par la fourniture d'un dispositif d'assistance électrique pour un vélo comportant un arbre pouvant être entraîné en rotation dans un sens positif simultanément par une paire de manivelles et par un moteur électrique, ledit dispositif comprenant un mécanisme d'embrayage qui est placé entre le moteur et l'arbre, comportant une position fermée dans laquelle le moteur et l'arbre sont solidaires en rotation de manière bi directionnelle, et une position ouverte dans laquelle une rotation de l'arbre dans un sens négatif, n'entraîne pas la rotation du moteur, ladite position ouverte étant effective lorsque le moteur a une vitesse de rotation nulle.

On notera que dans le cadre de l'invention, une différence de principe est faite entre une roue-libre et un mécanisme d'embrayage. En effet, un mécanisme d'embrayage est un dispositif de couplage mécanique qui lorsqu'il est en position « fermée » rend solidaire en rotation, dans les deux sens, un premier élément avec un deuxième élément. Une roue-libre, quant à elle, permet à la fois l'entraînement de l'élément 2 (élément mené) par l'élément 1 (élément menant) dans un premier sens de rotation relative, dit sens positif ; et permet une rotation relative sans entraînement, dans le sens positif de l'élément 2 par rapport à l'élément 1. Dans ce dernier cas, l'élément 2 tourne plus vite, dans le sens positif, que l'élément 1. En revanche, sa construction spécifique permet également l'entraînement dans le sens de rotation relative négatif de l'élément 1, par l'élément 2, lequel devient alors l'élément menant.

L'objectif de l'invention est également atteint par la fourniture d'un dispositif d'assistance électrique possédant une ou plusieurs des caractéristiques suivantes, dans toute combinaison techniquement acceptable:
- les manivelles sont fixées aux deux extrémités de l'arbre,
- un réducteur est placé entre le moteur et l'arbre de manière à réduire la vitesse de rotation du moteur,
- le réducteur comprend un train d'engrenage,
- le réducteur est de type épicycloïdal,
- le mécanisme de connexion comprend une roue libre est placée entre le moteur et l'arbre, ladite roue libre permettant au moteur d'entraîner l'arbre dans le sens positif et à l'arbre d'entraîner le moteur dans le sens négatif,
- la roue libre est placée entre le réducteur et l'arbre et en ce que la roue libre comprend des pièces de blocage se déplaçant (notamment des cliquets pivotants) entre une position « engagée » et une position « dégagée », et dont les extrémités distales sont susceptibles de venir en prise avec des dents solidaires de l'arbre lorsque les cliquets sont en position baissés.

L'objectif de l'invention est d'autre part atteint par une méthode d'assistance électrique pour un vélo équipé d'un dispositif tel que décrit dans les paragraphes précédents et comportant, en outre, un microcontrôleur qui commande la rotation du moteur dans un premier sens, dit sens positif, lorsqu'une assistance est souhaitée, ledit sens positif étant tel qu'il génère la marche avant du vélo ; caractérisée en ce que, lorsque la vitesse de rotation des manivelles est nulle ou lorsque celles-ci tournent dans le sens opposé à la marche avant du vélo, le microcontrôleur commande la rotation du moteur dans le sens opposé au premier sens, pendant un court laps de temps. Ce cours laps de temps est inférieur à quelques secondes, de préférence inférieur à une seconde. Il s'agit en effet de générer la rotation de quelques degrés pour assurer la rotation relative de la bague de synchronisation par rapport à la bague d'entraînement.

Dans un mode de réalisation de l'invention, le mécanisme de connexion comprend une roue libre débrayable. Une des manières d'obtenir ce résultat consiste à équiper le mécanisme de connexion de moyens permettant de maintenir les cliquets de la roue libre en position dégagée. Ces moyens qui permettent de maintenir les cliquets en position dégagée peuvent comprendre une bague de synchronisation des cliquets et une bague de friction, solidaires l'une de l'autre, ladite bague de friction venant au contact d'une partie fixe du dispositif d'assistance de manière à générer un couple de frottement au cours de sa rotation. La bague de friction est un anneau élastiquement déformable en appui précontraint sur la partie fixe du dispositif sur au moins deux zones régulièrement réparties sur la circonférence de la partie fixe. La partie fixe peut par exemple être un fût cylindrique. Lors d'une rotation de la bague de friction dans le sens positif, celle-ci génère un couple qui tend à engager les cliquets et à l'inverse, lors d'une rotation dans le sens négatif, la bague de friction génère un couple opposé qui tend à dégager les cliquets

Dans cette première configuration de réalisation de l'invention, lorsque le mécanisme de connexion est à l'état de déconnexion (état 3), la roue libre n'est plus opérationnelle. Cela correspondra aux phases fonctionnelles 1, 3 et 4, telles décrites plus haut.

Le système de roue-libre débrayable selon l'invention est une roue-libre plus évoluée qui est connectée à trois corps (au lieu de deux seulement dans une roue-libre simple), on retrouve une entrée et une sortie mais aussi un troisième corps de référence lié au cadre fixe du vélo, qui va permettre de gérer la fonction de blocage / déblocage de la roue-libre à une condition de vitesse relative par rapport au cadre du vélo.

Ainsi, lorsque le pédalier tourne dans le sens normal de rotation, la roue-libre va fonctionner comme une roue libre simple. En revanche dès que le moteur d'assistance tourne en marche arrière, la roue libre va tendre à se déconnecter en évitant que le moteur puisse être entraîné en rotation en marche arrière par l'arbre du pédalier.

Ce système de roue-libre peut être placé à différentes positions dans la chaîne de transmission, elle peut être située très en amont à la sortie de l'arbre moteur, dans ce cas la roue-libre aura à transmettre un couple très faible mais à une vitesse de rotation élevée, ou située en aval du réducteur à l'endroit de la connexion mécanique avec l'arbre de pédalier, dans ce cas la vitesse de rotation sera réduite mais avec un niveau de couple à transmettre nettement plus élevé. Cette dernière réalisation correspond au premier mode de réalisation de l'invention qui sera décrit en détail ci-dessous.

Dans une autre configuration de l'invention, le mécanisme de connexion comprend une roue libre et un embrayage. L'embrayage et la roue libre ne sont alors pas nécessairement adjacents dans la voie de transmission moteur-roue. Cette configuration correspond au deuxième mode de réalisation de l'invention.

Dans cet autre mode de réalisation de l'invention le mécanisme d'embrayage peut être de type embrayage centrifuge qui passe de la position fermée (engagée) à la position ouverte (dégagée) lorsque la vitesse de rotation du moteur est inférieure à une vitesse donnée V1. Une des manières de réaliser un tel mécanisme d'embrayage est de faire un embrayage de type centrifuge qui comprend une pluralité de secteurs, équipés chacun de patins de friction susceptibles de venir au contact d'un cylindre de friction. En position ouverte, les patins de friction ne sont pas en contact avec le cylindre de friction, tandis qu'en position fermée, les secteurs, soumis à la force centrifuge, exercent un effort sur le cylindre de friction tel que les secteurs et le cylindre de friction sont solidaires en rotation et que le moteur peut transmettre un couple non nul à l'arbre d'entraînement.

Un tel mécanisme d'embrayage peut être placé à différents endroits au sein de la voie de transmission de puissance moteur-roue. Dans un mode de réalisation de l'invention le mécanisme d'embrayage est placé entre le moteur et le réducteur.

La vitesse V1 est choisie de telle manière que V1/R est inférieure à 25 tr/mn, R étant le rapport de réduction du réducteur.

L'invention sera mieux comprise à la lumière de la description qui suit. Le dessin qui y est annexé, comprend ;
La figure 1 est une vue d'ensemble d'un vélo intégrant un système d'assistance électrique selon un exemple de l'invention.
La figure 2 est une vue d'un agrandissement d'une partie de la figure 1, centrée sur le boîtier du pédalier.
La figure 3 est une vue en perspective du dispositif selon un premier mode de réalisation de l'invention.
La figure 4 est une vue en perspective éclatée et partielle du dispositif de la figure 3.
La figure 5 est une vue en coupe longitudinale du dispostif de la figure 3.
Les figures 6 et 7 sont respectivement des vues en coupe transversale D-D et B-B du dispositif de la figure 3 lorsque le mécanisme d'embrayage est en position fermée.
Les figures 8 et 9 sont respectivement des vues en coupe transversale D-D et B-B du dispositif de la figure 3 lorsque le mécanisme d'embrayage est en position ouverte.
La figure 10 est une vue en coupe transversale selon le plan E-E.
La figure 11 est une vue en coupe longitudinale d'un dispositif selon un deuxième mode de réalisation de l'invention
La figure 12 est une vue en perspective éclatée et partielle du dispositif de la figure 11.
La figure 13 est une vue de détail de la figure 12.
La figure 14 est une vue en coupe transversale F-F, lorsque le mécanisme d'embrayage est en position fermée.
La figure 15 est une vue en coupe transversale F-F, lorsque le mécanisme d'embrayage est en position ouverte.

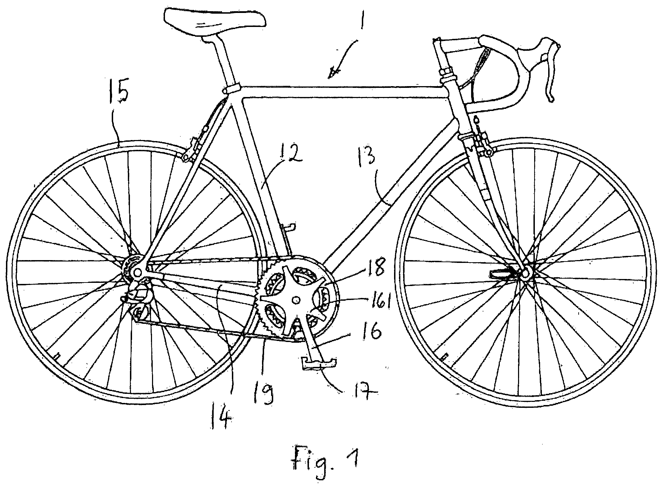

La figure 1 illustre un vélo 1 à assistance électrique intégrant un système d'assistance selon la présente invention. De manière connue, ce vélo comprend un cadre sur lequel sont fixées deux roues. La roue arrière 15 est motrice et est entraînée par le pédalier constitué d'une paire de manivelles 16 et de deux pédales 17. La manivelle droite comprend une étoile 161 dont les extrémités servent à la fixation d'un plateau denté 18. La chaîne de transmission 19.

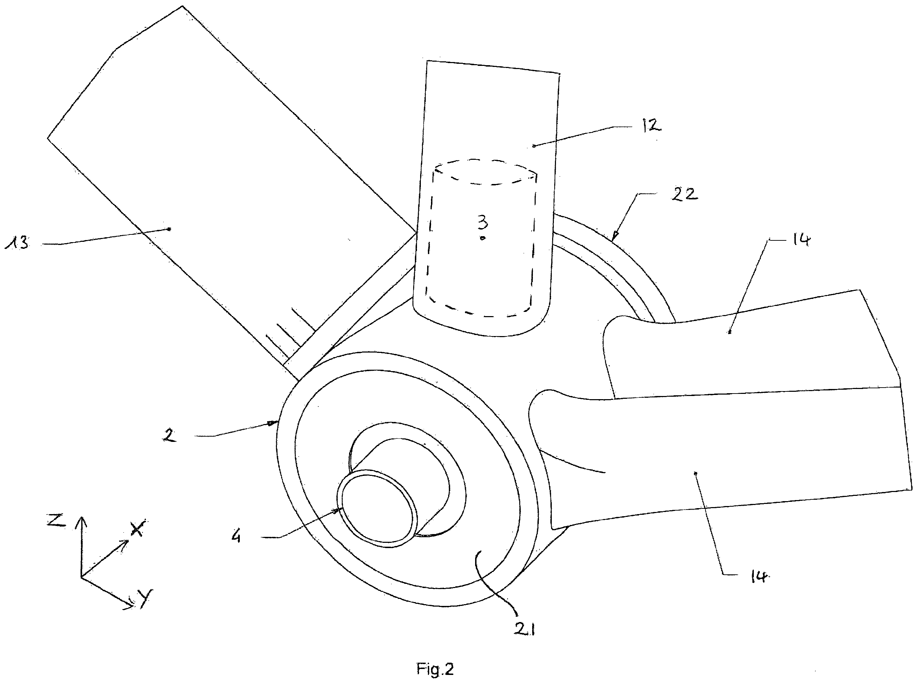

La figure 2 montre le boîtier de pédalier 2 qui fait partie intégrante du cadre et relie les différents tubes de celui-ci. Le moteur d'assistance 3 est logé à l'intérieur d'un élément formant le cadre du cycle. Il peut par exemple être logé à l'intérieur du tube de selle 12, ou dans le tube oblique 13, ou dans l'une des bases 14 reliant le pédalier au moyeu de la roue 5 arrière. Alternativement, le moteur peut être rapporté sur le cadre, par exemple en étant fixé à l'un de ces tubes 12, 13, 14 ou en étant fixé au boîtier 2 du pédalier.

Le moteur 3 est un moteur électrique. Il est alimenté de préférence par une batterie rapportée sur le cadre, ou logée à l'intérieur du cadre, ou encore portée par l'utilisateur. Le moteur 3 entraîne en rotation un organe moteur 31.

De préférence, l'organe moteur 31 est entraîné en rotation autour du même axe de rotation que la sortie du moteur. Cet axe de rotation est perpendiculaire à celui autour duquel l'arbre d'entraînement 4 du pédalier tourne. L'axe de rotation du pédalier 4 et l'axe de rotation du moteur 3 correspondent respectivement aux axes X et Z du repère orthogonal illustré en figure 2. Ainsi, l'axe de rotation du moteur 3 est perpendiculaire à celui de l'arbre 4 du pédalier.

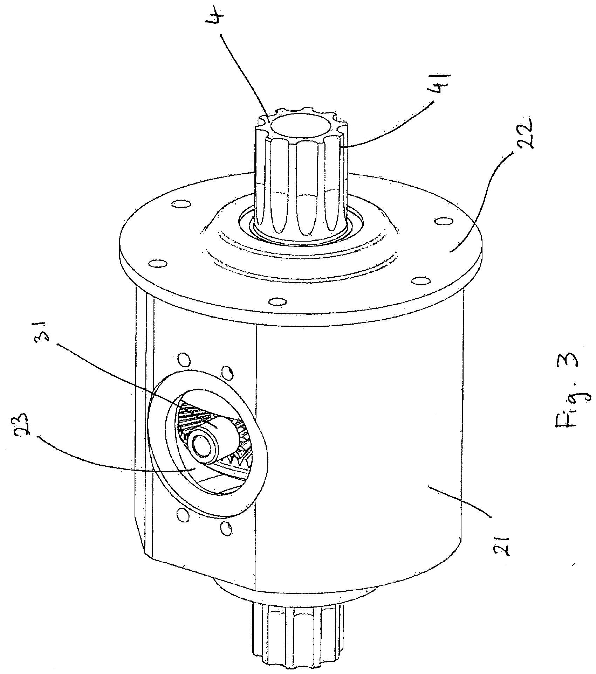

Un carter 21 est logé à l'intérieur du boîtier 2, ce carter est fermé par un couvercle 22. L'arbre 4 du pédalier traverse de part en part le carter 21. La figure 3 montre le carter 21 avant qu'il ne soit inséré dans le boîtier de pédalier. A chacune de ses extrémités, l'arbre 4 comprend des moyens 41 permettant la fixation des manivelles 17. Dans le cas décrit ici, ces moyens sont constitués de cannelures.

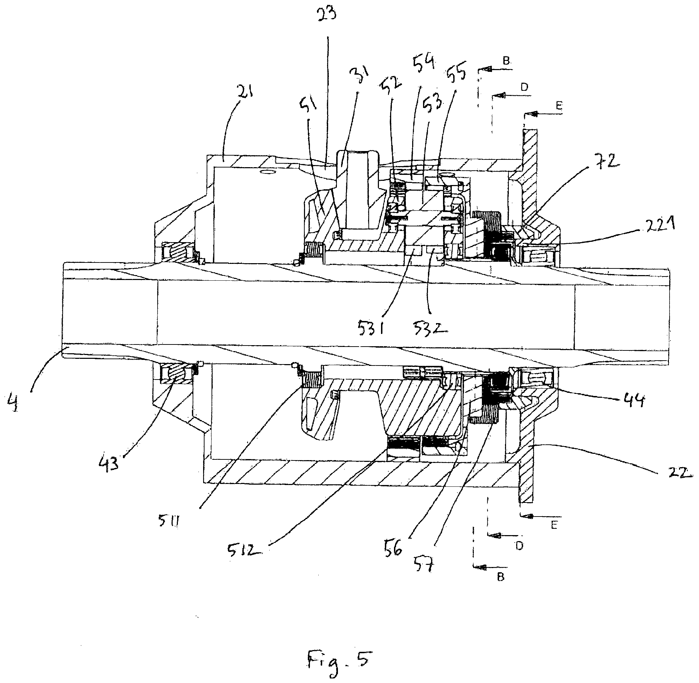

Le carter 21 présente une ouverture traversante permettant le passage de l'arbre 4 du pédalier. Afin de permettre un guidage précis et une bonne rigidité de l'arbre 4 à l'intérieur du boîtier 2, on prévoit deux organes de roulement 43, 44, typiquement des roulements à billes. Ces roulements à billes sont visibles à la figure 5.

Le boîtier 2 et le carter 21 présentent également un passage supérieur 23 permettant à l'organe moteur 31 de pénétrer à l'intérieur du boîtier 2.

Un réducteur 5 permet de transmettre les efforts depuis l'organe moteur 31 jusqu'à l'arbre 4 du pédalier. Le réducteur 5 est de type épicycloïdal à satellite double, afin de permettre un fort rapport de réduction dans un volume réduit.

L'organe moteur 31 est un pignon qui engrène avec une couronne mobile 51 en rotation autour d'un axe identique à celui X de l'arbre 4.

De préférence, l'organe moteur 31 est un pignon conique et la couronne mobile 51 porte une denture conique complémentaire de celle de l'organe moteur 31.

La couronne 51 est montée en rotation libre autour de l'arbre 4 du pédalier. Pour cela, on peut prévoir des organes de roulement, tels que des roulements à billes 511, 512, disposés entre l'arbre 4 et la couronne 51.

La couronne mobile 51 est solidaire en rotation d'un porte-satellites 52. De préférence, la couronne mobile 51 et le porte-satellites 52 forment une même pièce. Alternativement on pourra prévoir que couronne et porte-satellites soient des pièces distinctes solidarisées entre elles.

Le porte-satellites 52 présente des logements configurés pour accueillir des satellites 53. Ces satellites 53 sont de préférence au moins au nombre de trois et sont configurés pour évoluer dans un même plan perpendiculaire à l'axe X de l'arbre 4.

Sur cet exemple non limitatif, chaque satellite est solidaire d'un arbre monté en rotation dans un logement porté par le porte-satellites 52. A cet effet on prévoit des roulements, typiquement des roulements à billes montés entre l'arbre du satellite et le logement afin de minimiser les pertes par frottement de ce réducteur.

Chaque satellite 53 comprend deux pignons 531, 532. Les deux pignons 531, 532 de chaque satellite 53 sont placés parallèlement l'un par rapport à l'autre et sont solidaires l'un avec l'autre dans leur mouvement.

Un premier pignon 531 engrène avec une couronne fixe 54 solidaire du carter 21 et donc solidaire du cadre du cycle. Cette couronne fixe 54 porte une denture interne. Un deuxième pignon 532 engrène avec une denture portée par une deuxième couronne 55. La deuxième couronne 55 est solidaire avec une pièce d'entraînement 56 qui constitue la sortie du réducteur 5. La vitesse de rotation du moteur électrique qui peut être de quelques milliers de tours par minutes est réduite jusqu'à la sortie du réducteur à moins de 100 tr/mn. Par exemple, dans la configuration dessinée, le rapport de réduction du couple conique est de 5 suivi du réducteur épicycloïdal qui a un rapport de 21 soit un rapport total de 105 entre la vitesse du moteur et la vitesse de sortie du réducteur.

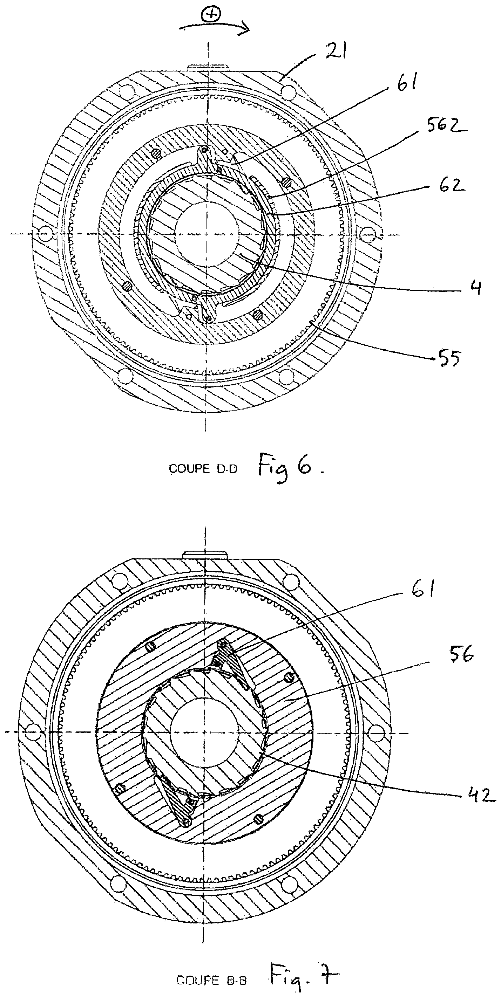

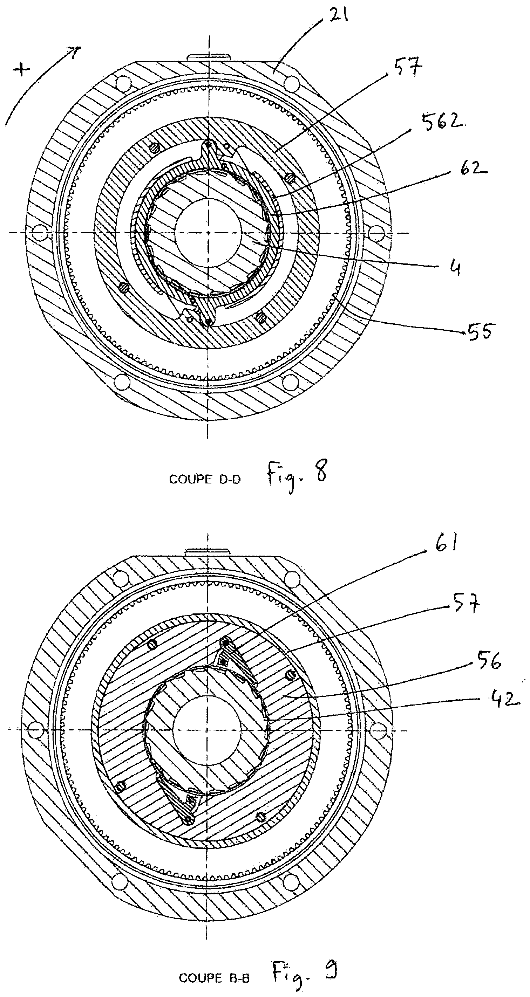

La pièce d'entraînement 56 est reliée à l'arbre 4 par l'intermédiaire du mécanisme de connexion selon l'invention. Celui-ci comprend une roue libre débrayable 6, laquelle comprend deux cliquets 61 et une bague de synchronisation 62. Les cliquets 61 sont montés pivotants à l'intérieur d'un logement 561 ménagé dans la pièce d'entraînement 56. Ils y sont maintenus grâce à une cage 57 fixée à la pièce d'entraînement 56 par quatre vis. Les cliquets 61 pivotent entre une position « engagée » représentée à la figure 7, dans laquelle leur extrémité distale est en prise avec une des dents 42 ménagées sur l'arbre d'entraînement 4, et une position « dégagée » représentée à la figure 9.

Une bague de synchronisation 62 synchronise le mouvement de basculement des deux cliquets 61. Elle est montée pivotante autour de l'axe X grâce à un rebord 562 qui la guide. La bague de synchronisation 62 a une petite amplitude de rotation par rapport à la bague d'entraînement 56. En effet, la bague de synchronisation est fixée aux cliquets à une distance de quelques millimètres de leur point de pivotement.

Les deux cliquets 61 sont opposés à 180° permettant d'équilibrer les efforts transmis en transmettant, en théorie, un couple pur sans composante radiale, et en divisant sensiblement par deux, l'effort transmis par chacun des cliquets. Les cliquets ont de préférence une extrémité avec un bec engageant avec des dents 42 ménagées sur l'arbre 4. Ainsi, dès que l'extrémité du cliquet vient au contact de l'arbre 4, le cliquet va alors continuer sa course pour s'engager automatiquement en fond de dent malgré les frottements s'opposant à son engagement, leur permettant de rester parfaitement stables une fois engagés, la bague de synchronisation 62 montée en pivot sur la sortie du réducteur permet de synchroniser la rotation de celle-ci afin qu'ils s'engagent bien simultanément. Les figures 7 et 9 montrent en coupe B-B, les deux cliquets 61, ainsi que la bague de synchronisation 62, en position engagée, respectivement, en position dégagée.

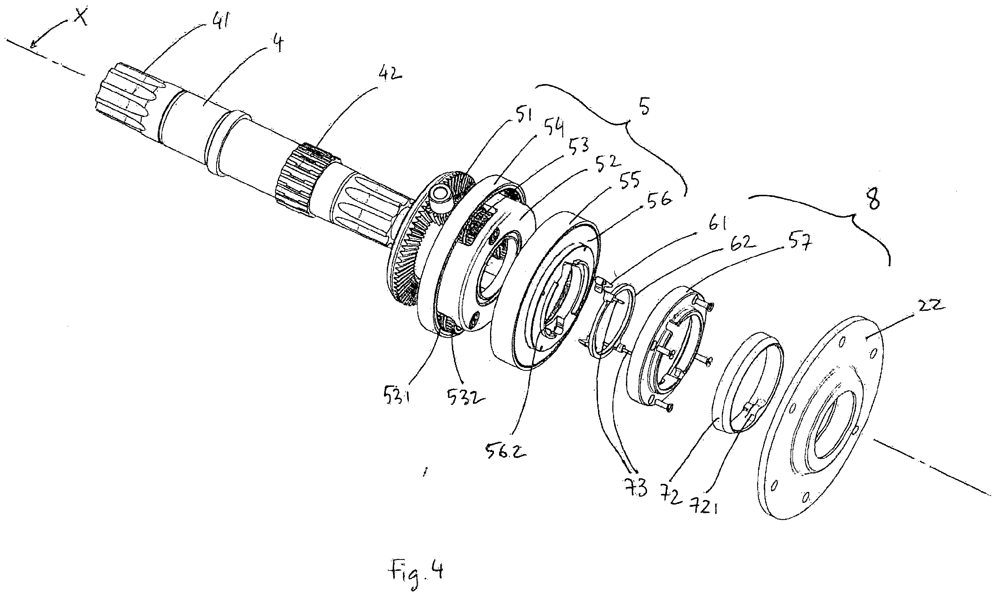

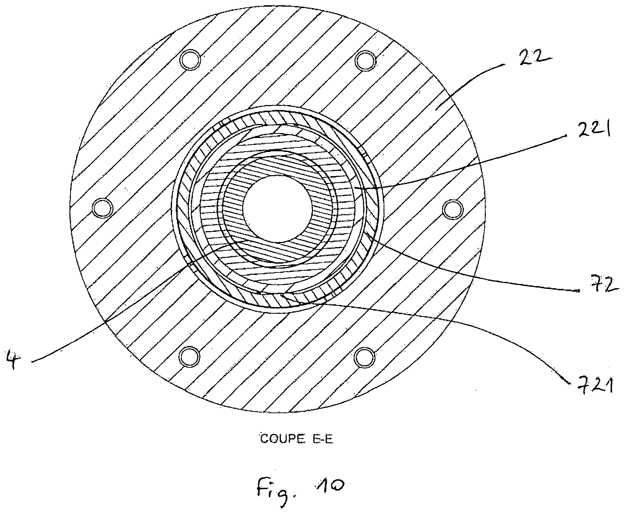

Le mécanisme de connexion 8 comprend également des moyens qui permettent de piloter les cliquets 61, et notamment de les maintenir en position dégagée. Ces moyens comprennent une bague de friction 72 et deux goupilles 73. Les figures 4, 5 et 10 montrent la géométrie et le fonctionnement de la bague de friction 72. La bague de friction est un anneau élastiquement déformable qui vient en appui précontraint sur une partie fixe du dispositif sur au moins deux zones. Dans le mode de réalisation représenté, la partie fixe est un fût cylindrique 221, faisant saillie depuis la face intérieure du couvercle 22. Cette bague comporte deux bourrelets 721 diamétralement opposés ménagés sur la face intérieure de la bague. Ces bourrelets sont prévus pour venir glisser sur la surface extérieure du fût 221 issu du couvercle 22. La bague de friction 72 est solidaire en rotation de la bague de synchronisation 62 par l'intermédiaire de deux goupilles 73 s'insérant dans deux trous radialement oblongs diamétralement opposés. Pour assurer un certain serrage de la bague de friction sur le fût 221, le diamètre intérieur entre les deux bourrelets est, à l'état libre, légèrement inférieur d'environ 0,5 mm au diamètre extérieur du fût 221. La mise en place de la bague de friction générera une certaine ovalisation de cette dernière, la géométrie de cette bague de friction doit être dimensionnée pour générer deux efforts radiaux diamétralement opposés lors de son ovalisation de 0,5 mm sans engendrer de contraintes élevées sur cette dernière afin qu'elle puisse supporter ce niveau de contrainte sans fluage durant toute la durée de vie du produit. On pourra choisir un matériau de type PBT ou POM pour réaliser la bague car cette pièce de frottement doit avoir une très bonne résistance à l'usure, et une très bonne élasticité ainsi qu'un bon comportement à la température de fonctionnement pour garantir une très bonne stabilité de sa précontrainte de serrage sur toute la durée de vie d'utilisation du produit.

Le serrage diamétral de cette bague de friction 72 sur le fût 221 va induire un couple de frottement stable et maîtrisé s'opposant à la rotation de cette dernière par rapport au fût 221 lui-même lié au boîtier du cadre 1.

A titre d'exemple, on obtient un très bon fonctionnement en dimensionnant la bague de friction pour obtenir deux efforts radiaux diamétralement opposés au niveau des bourrelets de friction d'environ 5N sous un serrage diamétral de 0,5 mm avec un niveau de contrainte de moins de 10 MPa sur cette dernière, évitant ainsi tout risque de relaxation ou fluage dans le temps, ces efforts radiaux générés sur le fût de diamètre 35 mm permettent de générer un couple de frottement d'environ 25 mN.m dans les deux sens de rotation, largement suffisant pour engager et désengager les cliquets, tout en générant un couple suffisamment faible pour ne pas induire de perte de puissance significative lors du glissement de cette dernière, puisque ce couple de frottement de 25 mN.m ne génère une perte que de 0,2 Watt à 80 tour par minute, ce qui est négligeable devant la puissance d'assistance et qui ne permet pas d'échauffer et d'user la zone des bourrelets en contact avec le fût 221. Le fonctionnement du mécanisme d'embrayage va maintenant être décrit en détail.

Lorsque la sortie du réducteur, c'est-à-dire la bague d'entraînement 56, est entraînée dans le sens positif (sens normal de pédalage repéré avec un signe + sur les figures), la bague de synchronisation 62 va être entraînée en rotation dans le même sens et elle va entraîner avec elle la bague de friction 72, le frottement des deux bourrelets 721 sur le fût du couvercle 22 va générer un couple de frottement qui va être transmis à la bague de synchronisation 62. Comme cette dernière a une certaine amplitude de rotation relative par rapport à la bague d'entraînement 56, le couple de frottement aura pour effet de la forcer dans le sens opposé au déplacement et donc à la faire tourner en arrière relativement à la sortie du réducteur. Cette rotation relative tend à faire pivoter les cliquets dans leur sens d'engagement provoquant la connexion en rotation du moteur avec l'arbre d'entraînement 4. La roue libre est alors engageante. Cet état d'engagement de la roue libre est représenté aux figures 6 et 7. Cela correspond à l'état 1 du mécanisme de connexion, dit état d'assistance, ou encore au mode de pédalage avec assistance (phase 2) lorsque le cycliste pédale moins vite que ce que l'assistance fournie par le moteur.

Dans le cas où le cycliste augmente sa fréquence de pédalage jusqu'à dépasser la vitesse de sortie de réducteur (phase 3), les dents 42 de l'arbre 4 vont lever les cliquets 61 à chaque passage de dents et aucun couple ne sera transmis entre la bague d'entraînement et l'arbre 4. La roue libre est alors glissante. Il s'agit là du fonctionnement classique d'une roue libre. Cela correspond à l'état 2, dite état de roue-libre, du mécanisme de connexion. Nous pouvons noter que lorsque le cliquet va être levé par une dent 42 de l'arbre 4, la bague de synchronisation 62 et la bague de friction 72 vont alors prendre un peu d'avance relativement à la bague d'entraînement mais le couple de frottement de la bague de friction provoqué par le frottement des bourrelets 721 sur le couvercle 22 restera sensiblement constant provoquant le ré-engagement immédiat des cliquets dès que la dent 42 sera passée, ainsi dans cette phase de roue-libre, la bague de frottement agit de manière analogue aux ressorts de rappel des roues libres à cliquets conventionnels.

Maintenant, si le cycliste décide de rétropédaler (phase 5), l'arbre 4 qui tourne dans le sens négatif va entraîner, par l'intermédiaire des cliquets, la bague d'entraînement 56 et la bague de friction 72. Le frottement des bourrelets 721 avec le couvercle 221 génère un couple de frottement qui s'oppose à la rotation et fait tourner la bague de synchronisation relativement à la bague d'entraînement jusqu'à ce que les deux cliquets se lèvent rendant impossible l'accouplement moteur. Le mécanisme de connexion est alors à l'état 3, dit état de déconnexion, comme représenté aux figures 8 et 9.

En fait, ce débrayage des cliquets est lié au sens de rotation relatif entre la couronne du réducteur et le couvercle du boîtier de pédalier (fixe), ainsi on pourra contrôler l'engagement des cliquets en pilotant le sens de rotation du moteur de sorte qu'il suffise d'ordonner une petite rotation arrière du moteur pour faire pivoter la bague d'entraînement 56 d'au moins quelques degrés vers l'arrière, c'est-à-dire dans le sens négatif, pour débrayer la roue libre.

Dans la pratique, si le cycliste est en marche avant avec une assistance du moteur (phase 2), les cliquets sont alors engagés. A partir de cet état, si le cycliste décide de faire brutalement marche arrière (phase 5), ou d'arrêter de pédaler pour pouvoir stopper (phase 4), comme les cliquets ont des becs engageants, il peut être possible que les cliquets ne puissent pas se dégager facilement malgré le couple de frottement appliqué sur la bague de synchronisation, pour cela il est souhaitable qu'un microcontrôleur de commande (non représenté) puisse détecter cet événement soit par un capteur de couple de pédalage (non représenté) qui devient subitement nul ou négatif, soit par une vitesse de rotation du pédalier nulle détectée par un capteur angulaire (non-représenté), soit par une forte décélération angulaire ou encore par une inversion du sens de rotation du moteur ou du pédalier et ordonner alors une rotation arrière du moteur avec une accélération arrière plus importante que celle du cycliste pendant une fraction de tour ce qui va désengager les cliquets et permettent leur soulèvement, cette marche arrière pourra être stoppée quasi immédiatement et la roue-libre restera alors dans cet état stable désengagé sans induire le moindre frottement ou le moindre bruit supplémentaire pour le cycliste.

Enfin, lorsque le cycliste décide de se passer d'assistance ou que la batterie est épuisée (phase 1), le microcontrôleur ordonnera une rotation en marche arrière du moteur afin de placer la roue libre en l'état désengagé. Ainsi la présence du dispositif d'assistance n'induit aucun frottement ou bruit supplémentaire.

Dans une variante de réalisation du premier mode de l'invention, un ressort placé entre la bague d'entraînement 56 et la bague de synchronisation 62, maintient les cliquets dans la position désengagée, pour une absence de rotation ou une rotation négative de la bague de friction. Le couple de rappel du ressort doit être inférieur au couple de frottement de la bague de friction afin qu'une rotation de cette dernière dans le sens positif provoque bien l'engagement des cliquets. Ainsi, si le cycliste fait un rétropédalage, il va désengager les cliquets qui trouveront, grâce au ressort, une position désengagée stable (état 3). Dans cette variante, la commande du moteur en marche arrière n'est pas nécessaire.

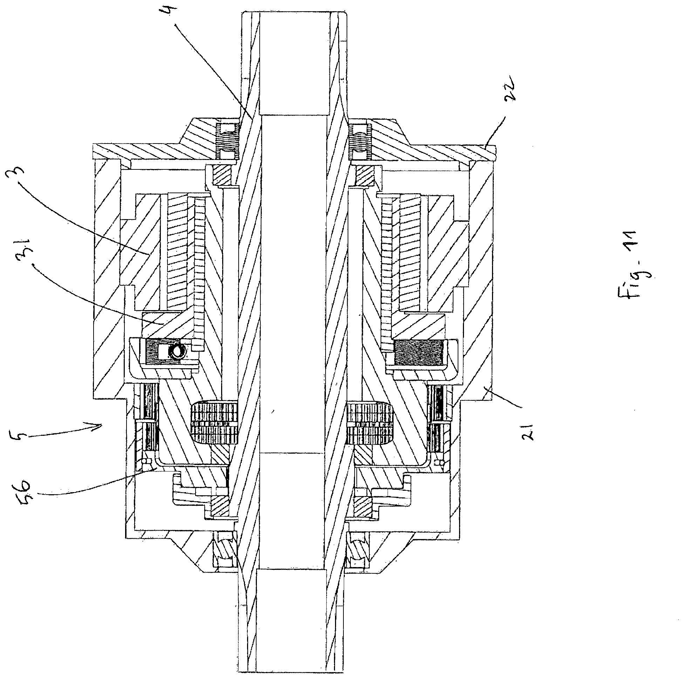

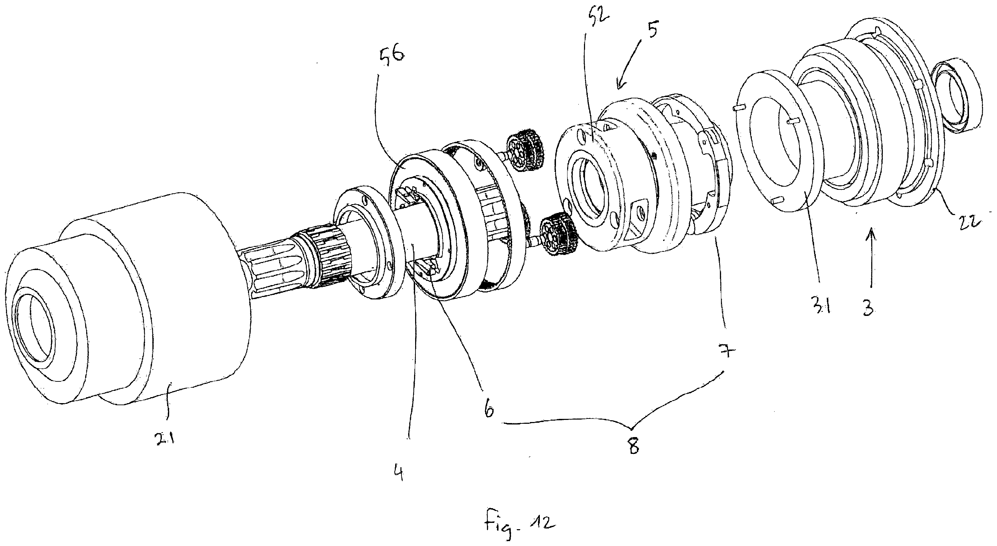

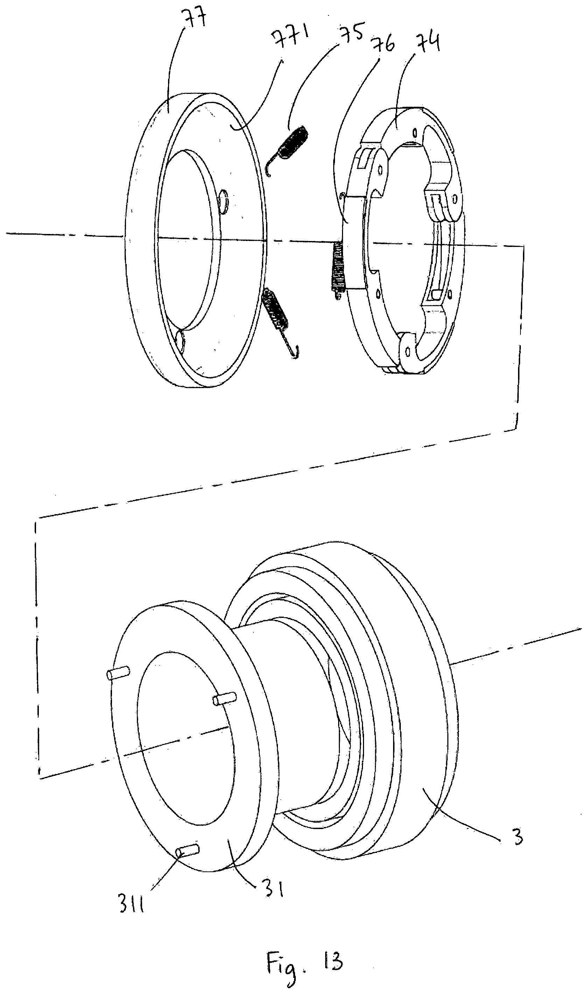

Les figures 11 à 15 décrivent un deuxième mode de réalisation de l'invention dans lequel le mécanisme de connexion 8 comprend une roue libre 6 et un mécanisme d'embrayage 7 distincts. De plus, roue-libre et embrayage ne sont pas directement adjacents dans la voie de transmission de puissance moteur-roue. En effet, comme on le verra plus loin, un réducteur 5 s'intercale entre embrayage et roue libre. Ce mode de réalisation diffère également en ce que le moteur d'assistance 3 est un moteur concentrique à l'arbre d'entraînement 4. Il est bien entendu que le type et la disposition du moteur ne sont pas limitatifs dans le cadre de l'invention et que le premier mode de réalisation décrit ci-dessus pourrait très bien être équipé d'un moteur concentrique à l'arbre d'entraînement.

La figure 11 montre en coupe longitudinale, le bloc complet avant que celui-ci ne soit inséré à l'intérieur du boîtier de pédalier du vélo comme cela est montré à la figure 2. L'ensemble des éléments sont logés à l'intérieur d'un carter 21 fermé par un couvercle 22. Le moteur 3 entraîne en rotation l'organe moteur 31. Ce dernier comporte trois pions 311 faisant saillie de sa surface frontale qui permettent l'entraînement du réducteur 5 au travers d'un mécanisme d'embrayage 7, dont le fonctionnement sera exposé ci-dessous.

Le réducteur 5 dans ce mode de réalisation est sensiblement identique à celui décrit avec le premier mode de réalisation. Il ne sera pas de nouveau décrit dans les détails. Il s'agit d'un réducteur ayant un rapport de réduction R qui est égal à 41 dans ce deuxième mode de réalisation. L'entrée du réducteur se fait par le porte satellite 52 et la sortie du réducteur 5 est constituée par une bague d'entraînement 56 qui entraîne l'arbre 4 au travers d'une roue libre simple 6. Il s'agit d'une roue libre à cliquet simple sensiblement identique à celle décrite pour le premier mode de réalisation de l'invention mais dont les cliquets sont engagés de manière traditionnelle chacun par un petit ressort dans leur position d'engagement.

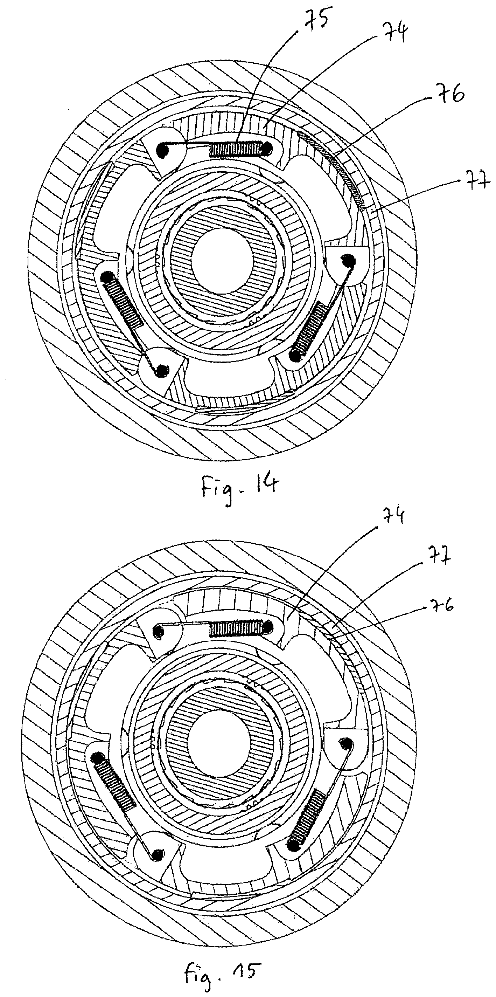

Le mécanisme d'embrayage 7 comprend une bague d'embrayage 77 et trois secteurs 74 logés à l'intérieur de ladite bague et se répartissant sur toute la circonférence. La bague d'embrayage 77 est solidaire du porte satellite 52. Chaque secteur est monté pivotant sur un pion 311 et est contraint par un ressort de rappel 75 qui le relie à un autre pion. Un patin de friction 76 recouvre, au moins partiellement, la périphérie de chacun des secteurs 74. Les ressorts 75 sont choisis de telle manière que lorsque l'embrayage 7 n'est pas en rotation, la force de rappel des ressorts 75 contraint les secteurs 74 vers l'arbre 4 comme cela est visible à la figure 14.

Lorsque le moteur n'est pas en rotation, ou tourne à une vitesse faible, il n'y a pas contact, ou pas de frottement suffisant, entre les patins de friction 76 et le cylindre de friction 771 de la bague d'embrayage 77, l'embrayage est ouvert. Le moteur 3 n'est alors plus solidaire en rotation, avec le réducteur 5, et par conséquent l'arbre d'entraînement, et ce, dans les deux sens de rotation.

Lorsque le moteur se met en marche à une vitesse suffisamment élevée, il entraîne les secteurs, qui soumis à la force centrifuge, pivotent autour des pions 311. La force centrifuge qui s'exerce sur les secteurs dépasse alors la force de rappel des ressorts et les patins de friction s'appliquent contre le cylindre de friction 771 de la bague d'embrayage. La vitesse du moteur est alors V1, qui est la vitesse de début de patinage. Les efforts centrifuges exercés sur les secteurs augmentant avec le carré de la vitesse, les efforts générés sur le patin de friction vont très vite permettre à l'embrayage de stopper le glissement de ces derniers par rapport au cylindre de friction. La vitesse du moteur est alors V2, c'est-à-dire la vitesse de fin de patinage au couple maxi du moteur. On se trouve alors dans la configuration décrite à la figure 15. Cette configuration correspond à la position fermée du mécanisme d'embrayage dans laquelle le moteur est complétement solidaire du réducteur 5 et de l'arbre d'entraînement 4.

Le fonctionnement d'un cycle équipé d'un dispositif d'assistance selon le deuxième mode de réalisation de l'invention est détaillé ci-dessous.

Lorsque le cycliste ne souhaite pas d'assistance ou que la batterie est épuisée (phase 1), l'embrayage centrifuge 7 est ouvert et le moteur 3 est désolidarisé de l'arbre d'entraînement 4. La voie de transmission moteur-roue est rompue. Cela correspond à l'état 3 du mécanisme de connexion 8. Par conséquent, le moteur ne peut être en aucun cas endommagé par une rotation des pédales, quelle que soit la vitesse à laquelle on fait tourner ces dernières.

Lorsque le cycliste souhaite bénéficier de l'assistance et que le moteur est en marche, la rotation du moteur à une vitesse supérieure à une vitesse donnée V2, par exemple 500 tours par minute, met l'embrayage en position fermée. Le moteur 3 contribue à l'entraînement de l'arbre 4 avec les pédales (phase 2). Cela correspond à l'état 1 du mécanisme de connexion. Si le cycliste pédale à une cadence plus rapide que celle que le moteur 3 est en mesure de fournir à l'arbre 4, alors la roue libre 6 se déconnecte. Dans cette configuration, le moteur ne contribue plus à l'entraînement de l'arbre (phase 3), le mécanisme de connexion se trouve à l'état 2.

Lorsque le cycliste arrête de pédaler (phase 4), un capteur de cadence de pédalage en informe le microcontrôleur qui arrête le moteur. Dès que la rotation de ce dernier passe sous la valeur V1, l'embrayage 7 passe en configuration ouverte.

Si en cours d'utilisation avec assistance, le cycliste fait une marche arrière avec les pédales (phase 5), le passage de la vitesse de rotation du pédalier par une vitesse nulle (et par conséquent inférieure à V1) a pour effet, comme pour la phase 4, l'ouverture de l'embrayage et la déconnexion du moteur. Le mécanisme de connexion passe à l'état 3. Dans ces deux derniers cas, l'état 3 du mécanisme de connexion est un état transitoire instable car aussitôt que le moteur est de nouveau entraîné à une vitesse V1, le mécanisme de connexion repasse à l'état 1.

En pratique, la vitesse V1 est choisie de telle manière que lorsque le moteur tourne à la vitesse V1, l'arbre 4, dont la vitesse est V1/R est comprise entre 1 et 25 tr/mn. Ces vitesses ne correspondent pas à des cadences usuelles de pédalage, lesquelles sont comprises entre 30 et 110 tr/mn. Dans l'exemple représenté ici, le rapport du réducteur R étant égal à 41, la vitesse V1 est comprise entre 41 et 1025 tr/mn.

Le concepteur doit déterminer les caractéristiques mécaniques des secteurs et des ressorts afin que lorsque le moteur tourne à la vitesse V2, 100 % du couple maxi du moteur soit transmis, c'est-à-dire qu'il n'y ait plus de glissement. De préférence, la vitesse V2 correspond à une vitesse de l'arbre 4, V2/R, d'environ 40 tr/mn. Dans l'exemple représenté, V2 est environ 1640 tr/mn. Lorsque le moteur tournera à une vitesse supérieure à V2, il est assuré qu'il n'y aura pas de patinage, c'est-à-dire de glissement et donc d'échauffement et de perte d'énergie.

## Revendications

1. Dispositif d'assistance électrique pour un vélo comportant un arbre (4) solidaire en rotation avec une paire de manivelles (16) et pouvant être entraîné en rotation dans un sens positif par un moteur électrique (3), **caractérisé en ce qu'**un mécanisme de connexion (8) est placé entre le moteur (3) et l'arbre (4), lequel mécanisme de connexion comprenant soit une roue libre débrayable, soit une roue libre et un embrayage, de sorte que le mécanisme de connexion est configuré pour présenter au moins trois états distincts :
- Etat 1, dit état d'assistance, dans lequel le moteur transmet un couple à l'arbre (4) par l'intermédiaire d'une pièce d'entraînement qui tourne à la même vitesse que l'arbre (4),
- Etat 2, dit état de roue-libre, dans lequel, la rotation de l'arbre (4) dans le sens positif est supérieure à celle de la pièce d'entraînement (56),
- Etat 3, dit état de déconnexion, dans lequel une rotation dans le sens positif ou dans le sens négatif de l'arbre (4) ne peut entraîner la rotation du moteur (3).

2. Dispositif selon la revendication précédente, **caractérisé en ce que** les manivelles (16) sont fixées aux deux extrémités de l'arbre (4).

3. Dispositif selon l'une des revendications précédentes, **caractérisé en ce qu'**un réducteur (5) est placé entre le moteur (3) et l'arbre (4) de manière à réduire la vitesse de rotation de du moteur.

4. Dispositif selon la revendication précédente, **caractérisé en ce que** le réducteur (5) comprend un train d'engrenage.

5. Dispositif selon la revendication précédente, **caractérisé en ce que** le réducteur (5) est un réducteur de type épicycloïdal.

6. Dispositif selon l'une des revendications précédentes, **caractérisé en ce que** le mécanisme de connexion comprend des pièces de blocage se déplaçant entre une position « engagée » et une position « dégagée » ainsi que des moyens permettant de maintenir les pièces de blocages (61) en position dégagée.

7. Dispositif selon la revendication précédente, **caractérisé en ce que** les pièces de blocage sont des cliquets (61) pivotants dont les extrémités distales sont susceptibles de venir en prise avec des dents solidaires de l'arbre (4) lorsque les cliquets sont en position engagée.

8. Dispositif selon la revendication précédente, **caractérisé en ce que** les moyens permettant de maintenir les cliquets en position dégagée comprennent une bague de synchronisation des cliquets (61) et une bague de friction (73), solidaires l'une de l'autre, ladite bague de friction (73) venant au contact d'une partie fixe du dispositif d'assistance de manière à générer un couple de frottement au cours de sa rotation.

9. Dispositif selon la revendication précédente, **caractérisée en ce que**, lors d'une rotation de la bague de friction dans le sens positif, celle-ci génère un couple qui tend à engager les cliquets et à l'inverse, lors d'une rotation dans le sens négatif, la bague de friction génère un couple opposé qui tend à dégager les cliquets.

10. Dispositif selon l'une des deux revendications précédentes, **caractérisé en ce que** la bague de friction (73) est un anneau élastiquement déformable en appui précontraint sur la partie fixe du dispositif sur au moins deux zones.

11. Dispositif selon l'une des revendications 1 à 5, **caractérisé en ce que** le mécanisme de connexion comprend une roue libre et un embrayage (7) de type embrayage centrifuge qui passe de la position fermée à la position ouverte lorsque la vitesse de rotation du moteur (3) est inférieure à une vitesse donnée V1.

12. Dispositif selon la revendication précédente, **caractérisé en ce que** le mécanisme d'embrayage comprend une pluralité de secteurs, équipés chacun de patins de friction susceptibles de venir au contact d'un cylindre de friction (771) et **en ce que** en position ouverte, les patins de friction (76) ne sont pas en contact avec le cylindre de friction (771), tandis qu'en position fermée, les secteurs (74), soumis à la force centrifuge, exercent un effort sur le cylindre de friction tel que secteurs (74) et cylindre de friction (771) sont solidaires en rotation et que le moteur (3) peut transmettre un couple non nul à l'arbre d'entraînement.

13. Dispositif selon l'une des revendications précédentes en combinaison avec la revendication 3, **caractérisé en ce que** le mécanisme d'embrayage (7) est placé entre le moteur (3) et le réducteur (5).

14. Méthode d'assistance électrique pour un vélo équipé d'un dispositif selon l'une des revendications 1 à 12, et comportant un microcontrôleur qui commande la rotation du moteur (3) dans un premier sens, dit sens positif, lorsqu'une assistance est souhaitée par l'utilisateur, ledit sens positif étant tel qu'il génère la marche avant du vélo ; **caractérisée en ce que**, lorsque la vitesse de rotation des manivelles (16) est nulle ou lorsque celles-ci tournent dans le sens opposé à la marche avant du vélo, le microcontrôleur commande la rotation du moteur (3) dans le sens opposé au premier sens, pendant un court laps de temps.

15. Méthode d'assistance électrique pour un vélo équipé d'un dispositif selon la revendication 13, dans lequel le réducteur (5) présente un rapport de réduction R, **caractérisé en ce que** lorsque la vitesse de rotation du moteur (3) est inférieure à V1, le mécanisme d'embrayage est en position ouverte, ladite vitesse V1 étant telle que V1/R < 25 tr/mn.

## Patentansprüche

1. Vorrichtung zur elektrischen Unterstützung für ein Fahrrad, umfassend eine Welle (4), die drehfest mit einem Kurbelpaar (16) verbunden ist und durch einen Elektromotor (3) in eine positive Richtung gedreht werden kann, **dadurch gekennzeichnet, dass** zwischen dem Motor (3) und der Welle (4) ein Verbindungsmechanismus (8) angeordnet ist, wobei der Verbindungsmechanismus entweder einen auskuppelbaren Freilauf oder einen Freilauf und eine Kupplung umfasst, so dass der Verbindungsmechanismus dazu ausgelegt ist, mindestens drei verschiedene Zustände aufzuweisen:
- Zustand 1, der sogenannte Unterstützungszustand, in dem der Motor über ein Antriebsteil, das sich mit derselben Drehzahl wie die Welle (4) dreht, ein Drehmoment auf die Welle (4) überträgt,
- Zustand 2, der sogenannte Freilaufzustand, in dem die Drehung der Welle (4) in der positiven Richtung größer als die des Antriebsteils (56) ist,
- Zustand 3, der sogenannte Trennzustand, in dem eine Drehung der Welle (4) in der positiven Richtung oder in der negativen Richtung nicht zu einer Drehung des Motors (3) führen kann.

2. Vorrichtung nach dem vorangehenden Anspruch, **dadurch gekennzeichnet, dass** die Kurbeln (16) an beiden Enden der Welle (4) befestigt sind.

3. Vorrichtung nach einem der vorangehenden Ansprüche, **dadurch gekennzeichnet, dass** zwischen dem Motor (3) und der Welle (4) ein Untersetzungsgetriebe (5) angeordnet ist, um die Drehzahl des Motors zu reduzieren.

4. Vorrichtung nach dem vorangehenden Anspruch, **dadurch gekennzeichnet, dass** das Untersetzungsgetriebe (5) ein Getriebe umfasst.

5. Vorrichtung nach dem vorangehenden Anspruch, **dadurch gekennzeichnet, dass** das Untersetzungsgetriebe (5) ein Untersetzungsgetriebe vom Planetengetriebetyp ist.

6. Vorrichtung nach einem der vorangehenden Ansprüche, **dadurch gekennzeichnet, dass** der Verbindungsmechanismus Blockierteile, die sich zwischen einer "eingerückten" und einer "ausgerückten" Position bewegen, sowie Mittel, die es ermöglichen, die Blockierteile (61) in der ausgerückten Position zu halten, umfasst.

7. Vorrichtung nach dem vorangehenden Anspruch, **dadurch gekennzeichnet, dass** die Blockierteile schwenkbare Sperrklinken (61) sind, deren distale Enden mit Zähnen in Eingriff kommen können, die fest mit der Welle (4) verbunden sind, wenn sich die Sperrklinken in der eingerückten Position befinden.

8. Vorrichtung nach dem vorangehenden Anspruch, **dadurch gekennzeichnet, dass** die Mittel, die es ermöglichen, die Sperrklinken in der eingerückten Position zu halten, einen Ring zur Synchronisation der Sperrklinken (61) und einen Reibungsring (73) umfassen, die fest miteinander verbunden sind, wobei der Reibungsring (73) mit einem festen Teil der Unterstützungsvorrichtung in Kontakt kommt, um während seiner Drehung ein Reibungsdrehmoment zu erzeugen.

9. Vorrichtung nach dem vorangehenden Anspruch, **dadurch gekennzeichnet, dass** bei einer Drehung des Reibungsrings in die positive Richtung dieser ein Drehmoment erzeugt, das dazu neigt, die Sperrklinken einzurücken, und dass umgekehrt bei einer Drehung in die negative Richtung der Reibungsring ein entgegengesetztes Drehmoment erzeugt, das dazu neigt, die Sperrklinken auszurücken.

10. Vorrichtung nach einem der beiden vorangehenden Ansprüche, **dadurch gekennzeichnet, dass** der Reibungsring (73) ein elastisch verformbarer Ring ist, der in mindestens zwei Bereichen vorgespannt auf dem festen Teil der Vorrichtung aufliegt.

11. Vorrichtung nach einem der Ansprüche 1 bis 5, **dadurch gekennzeichnet, dass** der Verbindungsmechanismus einen Freilauf und eine Kupplung (7) vom Fliehkraftkupplungstyp umfasst, die aus der geschlossenen Position in die offene Position übergeht, wenn die Drehzahl des Motors (3) unter einer gegebenen Drehzahl V1 liegt.

12. Vorrichtung nach dem vorangehenden Anspruch, **dadurch gekennzeichnet, dass** der Kupplungsmechanismus eine Vielzahl von Sektoren umfasst, die jeweils mit Reibklötzen ausgestattet sind, die mit einem Reibzylinder (771) in Kontakt kommen können, und dass in der offenen Position die Reibklötze (76) nicht mit dem Reibzylinder (771) in Kontakt stehen, während in der geschlossenen Position die Sektoren (74), die der Zentrifugalkraft ausgesetzt sind, eine solche Kraft auf den Reibzylinder ausüben, dass Sektoren (74) und Reibzylinder (771) drehfest miteinander verbunden sind und dass der Motor (3) ein Drehmoment ungleich null auf die Antriebswelle übertragen kann.

13. Vorrichtung nach einem der vorhergehenden Ansprüche in Kombination mit Anspruch 3, **dadurch gekennzeichnet, dass** der Kupplungsmechanismus (7) zwischen dem Motor (3) und dem Untersetzungsgetriebe (5) angeordnet ist.

14. Verfahren zur elektrischen Unterstützung für ein Fahrrad, das mit einer Vorrichtung nach einem der Ansprüche 1 bis 12 ausgestattet ist und einen Mikrocontroller umfasst, der die Drehung des Motors (3) in eine als positive Richtung bezeichnete Richtung steuert, wenn vom Benutzer eine Unterstützung gewünscht wird, wobei die positive Richtung so ist, dass sie die Vorwärtsbewegung des Fahrrads erzeugt; **dadurch gekennzeichnet, dass**, wenn die Drehzahl der Kurbeln (16) null ist oder wenn sich diese in eine zur Vorwärtsbewegung des Fahrrads entgegengesetzte Richtung drehen, der Mikrocontroller die Drehung des Motors (3) während eines kurzen Zeitraums in der zur ersten Richtung entgegengesetzten Richtung steuert.

15. Verfahren zur elektrischen Unterstützung für ein Fahrrad, das mit einer Vorrichtung nach Anspruch 13 ausgestattet ist, wobei das Untersetzungsgetriebe (5) ein Untersetzungsverhältnis R aufweist, **dadurch gekennzeichnet, dass**, wenn die Drehzahl des Motors (3) kleiner als V1 ist, sich der Kupplungsmechanismus in der offenen Position befindet, wobei die Drehzahl V1 so ist, dass V1/R < 25 U/min.

## Claims

1. Electrical assistance device for a bicycle comprising a shaft (4) secured in rotation with a pair of cranks (16) and that can be driven in rotation in a positive direction by an electric motor (3), **characterized in that** a connection mechanism (8) is placed between the motor (3) and the shaft (4), which connection mechanism comprising either a declutchable freewheel, or a freewheel and a clutch, such that the connection mechanism is configured to have at least three distinct states:
- State 1, called assistance state, in which the motor transmits a torque to the shaft (4) via a drive piece which revolves at the same speed as the shaft (4),
- State 2, called freewheel state, in which the rotation of the shaft (4) in the positive direction is greater than that of the drive piece (56),
- State 3, called disconnection state, in which a rotation in the positive direction or in the negative direction of the shaft (4) cannot drive the rotation of the motor (3).

2. Device according to the preceding claim, **characterized in that** the cranks (16) are fixed to the two ends of the shaft (4).

3. Device according to one of the preceding claims, **characterized in that** a reducing gear (5) is placed between the motor (3) and the shaft (4) so as to reduce the speed of rotation of the motor.

4. Device according to the preceding claim, **characterized in that** the reducing gear (5) comprises a gear train.

5. Device according to the preceding claim, **characterized in that** the reducing gear (5) is a reducing gear of epicyclic type.

6. Device according to one of the preceding claims, **characterized in that** the connection mechanism comprises blocking pieces that are displaced between an "engaged" position and a "disengaged" position and means that make it possible to keep the blocking pieces (61) in disengaged position.

7. Device according to the preceding claim, **characterized in that** the blocking pieces are pivoting ratchets (61) whose distal ends are capable of meshing with teeth secured to the shaft (4) when the ratchets are in engaged position.

8. Device according to the preceding claim, **characterized in that** the means making it possible to keep the ratchets in disengaged position comprise a synchronization ring of the ratchets (61) and a friction ring (73), secured to one another, said friction ring (73) coming into contact with a fixed part of the assistance device so as to generate a friction torque during its rotation.

9. Device according to the preceding claim, **characterized in that**, in a rotation of the friction ring in the positive direction, the latter generates a torque which tends to engage the ratchets and, conversely, in a rotation in the negative direction, the friction ring generates an opposite torque which tends to disengage the ratchets.

10. Device according to one of the two preceding claims, **characterized in that** the friction ring (73) is a ring that is elastically deformable by prestressed bearing on the fixed part of the device on at least two zones.

11. Device according to one of Claims 1 to 5, **characterized in that** the connection mechanism comprises a freewheel and a clutch (7) of centrifugal clutch type which switches from the closed position to the open position when the speed of rotation of the motor (3) is less than a given speed V1.

12. Device according to the preceding claim, **characterized in that** the clutch mechanism comprises a plurality of segments, each equipped with friction pads that can come into contact with a friction cylinder (771) and **in that** in open position, the friction pads (76) are not in contact with the friction cylinder (771), while in closed position, the segments (74), subject to the centrifugal force, exert an effort on the friction cylinder such that segments (74) and friction cylinder (771) are secured in rotation and that the motor (3) can transmit a non-zero torque to the drive shaft.

13. Device according to one of the preceding claims in combination with claim 3 , **characterized in that** the clutch mechanism (7) is placed between the motor (3) and the reducing gear (5).

14. Electrical assistance method for a bicycle equipped with a device according to one of Claims 1 to 12, and comprising a microcontroller which controls the rotation of the motor (3) in a first direction, called positive direction, when an assistance is desired by the user, said positive direction being such that it generates the forward motion of the bicycle; **characterized in that**, when the speed of rotation of the cranks (16) is zero or when the latter revolve in the direction opposite to the forward motion of the bicycle, the microcontroller controls the rotation of the motor (3) in the direction opposite to the first direction, during a short time period.

15. Electrical assistance method for a bicycle equipped with a device according to claim 13, wherein the reducing gear (5) has a reduction ratio R, **characterized in that** when the speed of rotation of the motor (3) is less than V1, the clutch mechanism is in open position, said speed V1 being such that V1/R < 25 rpm.
